# EUROPÄISCHE PATENTSCHRIFT

(11) **EP 3 453 140 B1**
(45) Veröffentlichungstag und Bekanntmachung des Hinweises auf die Patenterteilung: **15.07.2020**
(21) Anmeldenummer: 17717146.9
(22) Anmeldetag: 11.04.2017
(51) Int. Cl.: H04L 12/28, G05B 23/02, H04W 4/021

(54) **EXTERNES KOMMUNIKATIONSMODUL FÜR HAUSHALTSGERÄTE**
EXTERNAL COMMUNICATIONS MODULE FOR HOUSEHOLD DEVICES
MODULE DE COMMUNICATION EXTERNE POUR DES APPAREILS ÉLECTROMÉNAGERS

(30) Priorität: 03.05.2016 DE 102016207601
(43) Veröffentlichungstag der Anmeldung: 13.03.2019
(73) Patentinhaber: BSH Hausgeräte GmbH, 81739 München (DE)
(72) Erfinder: DÖRNER, Jan Philipp, 22527 Hamburg (DE); KUSCHINSKY, Niels, 80804 München (DE); FLOHRER, Nick, 81827 München (DE)
(86) Internationale Anmeldenummer: PCT/EP2017/058656
(87) Internationale Veröffentlichungsnummer: WO 2017/190922

(56) Entgegenhaltungen:
- WO-A1-2015/036229
- WO-A2-2008/003572
- DE-A1- 10 214 794
- DE-A1-102007 058 936

## Beschreibung

Die Erfindung betrifft ein Kommunikationsmodul. Insbesondere betrifft die Erfindung ein Kommunikationsmodul, das an der Außenseite eines Haushaltsgeräts nachgerüstet werden kann.

Eine Waschmaschine ist dazu eingerichtet, ein vorbestimmtes Programm abzuarbeiten, um eine Ladung Wäsche zu reinigen. Häufig ist die Ausführung des Programms von Parametern abhängig, die zu Beginn des Programmablaufs noch nicht bekannt sind, beispielsweise einem Verschmutzungsgrad der Wäsche. Die Waschmaschine kann während ihres Betriebs eine voraussichtlich verbleibende Laufzeit des Waschprogramms über eine optische Anzeige darstellen. Einige moderne Waschmaschinen sind mit Datenschnittstellen ausgerüstet, um eine Übertragung ihres Betriebszustands an ein entferntes Gerät zu ermöglichen. Beispielsweise kann sich ein Benutzer in einem anderen Raum aufhalten und mittels drahtloser Datenübertragung über den Fortschritt oder ein Ende des Programmablaufs informiert werden. Eine Waschmaschine älteren Baujahrs verfügt jedoch häufig nicht über eine solche Schnittstelle, über die Informationen nach außen bereitgestellt werden können.

WO 2015/036229 A1 betrifft das Bestimmen eines Betriebszustands eines Haushaltsgeräts auf der Basis von Messwerten eines Magnetfeldsensors, der an der Außenseite des Haushaltsgeräts angebracht ist. Der Magnetfeldsensor erlaubt nur eine relativ grobe Bestimmung des Betriebszustands und ist auf einen Einsatz an einem Haushaltsgerät eingeschränkt, das signifikante magnetische Emissionen

DE 10 2007 058936 A1 offenbart eine Sensoreinrichtung für ein Haushaltsgerät, umfassend mindestens eine Anschlussmöglichkeit für einen oder mehrere akustische Sensoren zum Erfassen eines Geräusches des Haushaltsgeräts sowie eine Auswerteeinheit, die derart eingerichtet ist, dass das Geräusch erkannt wird und abhängig von dem Geräusch ein Ausgangssignal erzeugbar ist.

Es ist eine Aufgabe der vorliegenden Erfindung, ein verbessertes Kommunikationsmodul, ein System und ein Verfahren bereitzustellen, die einen Betriebszustand eines Haushaltsgeräts datentechnisch erfassbar machen. Die Erfindung löst diese Aufgabe mittels der Gegenstände der unabhängigen Ansprüche. Unteransprüche geben bevorzugte Ausführungsformen wieder.

Ein erfindungsgemäßes Kommunikationsmodul für ein Haushaltsgerät umfasst eine Sensoreinrichtung, die dazu eingerichtet ist, im Bereich eines Gerätegehäuses des Haushaltsgeräts angebracht zu werden, eine drahtlose Datenschnittstelle und eine Verarbeitungseinrichtung. Die Sensoreinrichtung ist dazu eingerichtet, ein durch das Gerätegehäuse nach außen dringendes Emissionssignal einer den Betriebsprozess des Haushaltsgeräts durchführenden Komponente des Haushaltsgeräts abzutasten und die Verarbeitungseinrichtung ist dazu eingerichtet, auf der Basis von Messwerten der Sensoreinrichtung einen Betriebszustand des Haushaltsgeräts zu bestimmen und mittels der Datenschnittstelle bereitzustellen. Dabei kann das Kommunikationsmodul wahlweise an unterschiedlichen Arten von Haushaltsgeräten eingesetzt werden.

Es ist möglich, das Kommunikationsmodul nacheinander an unterschiedlichen Haushaltsgeräten einzusetzen, beispielsweise je nachdem, welches Haushaltsgerät gerade betrieben wird. So kann etwa das Kommunikationsmodul üblicherweise an einem Kühlschrank angebracht sein, um dessen Betriebszustand fortlaufend zu überwachen, und bei Bedarf an eine Geschirrspülmaschine versetzt werden, beispielsweise wenn diese betrieben wird, während sich keine Personen im Haushalt aufhalten. Die Funktion des Kommunikationsmoduls kann so flexibel und einfach an ein aktuelles Informationsbedürfnis eines Benutzers angepasst werden.

Das Kommunikationsmodul kann beispielsweise manuell auf die Art des Haushaltsgeräts abgestimmt werden, an dem es eingesetzt werden soll. Hierzu kann eine Eingabeeinrichtung am Kommunikationsmodul vorgesehen sein, über die die Art des Haushaltsgeräts eingegeben werden kann. In einer anderen Ausführungsform kann eine Codierung am Haushaltsgerät angebracht sein, die das Kommunikationsmodul abtastet, um die Art des Haushaltsgeräts zu bestimmen. Diese Codierung kann beispielsweise manuell angebracht sein und einen Zeichencode wie einen Strichcode, eine optische Matrix (wie z.B. einen QR-Code) oder einen Punktcode umfassen, der durch das Kommunikationsmodul optisch abgetastet werden kann.

In einer besonders bevorzugten Ausführungsform ist die Verarbeitungseinrichtung des Kommunikationsmoduls dazu eingerichtet, die Art des Haushaltsgeräts auf der Basis von Messwerten der Sensoreinrichtung zu bestimmen. Die Handhabung des Kommunikationsmoduls, insbesondere beim Wechsel von einem Haushaltsgerät an ein anderes, kann dadurch vereinfacht sein. Eine Fehlkonfiguration eines Benutzers kann ausgeschlossen sein. Eine Vorbereitung eines Haushaltsgeräts, um das Kommunikationsmodul an ihm einsetzen zu können, kann entbehrlich sein.

In einer Ausführungsform sind mehreren vorbestimmten Arten von Haushaltsgeräten jeweils vorbestimmte Emissionen zugeordnet. Die Verarbeitungseinrichtung des Kommunikationsmoduls ist hierbei dazu eingerichtet, Messwerte, die mittels der Sensoreinrichtung während des Betriebs des Haushaltsgeräts abgetastet werden, mit vorbestimmten Emissionen zu vergleichen, um zu bestimmen, an welcher Art Haushaltsgerät das Kommunikationsmodul eingesetzt ist. Beispielsweise kann eine erste Art Haushaltsgerät eine Waschmaschine und eine zweite einen Kühlschrank umfassen. Ist die Sensoreinrichtung zur Aufnahme eines magnetischen Wechselfelds eines Motors des Haushaltsgeräts eingerichtet, so können die relativ schwachen und üblicherweise periodischen Betriebsphasen eines Kühlkompressors des Kühlschranks gut von den kräftigeren und länger anhaltenden Betriebsphasen eines Antriebs- oder Schleudermotors der Waschmaschine unterschieden werden. Dadurch kann die Art des Haushaltsgeräts rasch und sicher festgestellt werden. Die Bestimmung des Betriebszustands des Haushaltsgeräts der bestimmten Art kann mit verbesserter Genauigkeit erfolgen. Die Emissionen können so vorbestimmt sein, dass sie sich jeweils auf eine vorbestimmte Art Haushaltsgerät beziehen oder auf eine Gruppe von Haushaltsgeräten der gleichen Art. Ist das Haushaltsgerät beispielsweise von der Art Wäschetrockner, so kann auf der Basis der vorbestimmten Emissionen zwischen einem einfachen Wäschetrockner und einem mit Wärmepumpe unterschieden werden. Eine feinere Auflösung, die auf ein bestimmtes Modell des Haushaltsgeräts hinweist, ist ebenfalls möglich. Die vorbestimmten Emissionen können im Kommunikationsmodul hinterlegt oder bei Bedarf drahtlos aufgespielt werden. Dazu kann ein Repositorium von vorbestimmten Emissionen und jeweils zugeordneten Haushaltsgeräten bereitgestellt sein.

Das Kommunikationsmodul ist dazu eingerichtet, wenigstens eine seiner Komponenten aus einem stromsparenden Modus in einen Betriebsmodus zu versetzten, wenn das mittels der Sensoreinrichtung abgetastete Emissionssignal auf eine Änderung des Betriebszustands des Haushaltsgeräts hinweist. Beispielsweise kann mittels der Sensoreinrichtung periodisch überprüft werden, ob das Haushaltsgerät in Betrieb ist oder nicht. Erst wenn es im Betrieb ist oder wenn sich sein Betriebszustand ändert, kann beispielsweise die drahtlose Datenschnittstelle des Kommunikationsmoduls aus einem stromsparenden Modus in einen Betriebsmodus versetzt werden. Der Betriebsmodus ermöglicht die Übermittlung des bestimmten Betriebszustands und kann nach dessen Übermittlung wieder beendet werden. Der stromsparende Modus kann nur eine Teilfunktionalität ermöglichen oder die Komponente vollständig abschalten. Beispielsweise kann die Verarbeitungseinrichtung unterschiedliche Stromsparmodi unterstützen, wobei die Leistungsfähigkeit oder Reaktionsgeschwindigkeit der Verarbeitungseinrichtung im jeweiligen Modus mit dem Stromverbrauch korreliert sein kann. Durch Unterstützung eines stromsparenden Modus an einer oder mehreren Komponenten kann das Kommunikationsmodul über längere Zeit betrieben werden, ohne eine Energiequelle wie eine Batterie auszutauschen oder einen Akkumulator aufzuladen. Eine kontinuierliche Betriebsdauer des Kommunikationsmoduls kann somit erhöht werden und Dauern von mehreren Wochen oder mehreren Monaten erreichen.

Insbesondere umfasst das Kommunikationsmodul eine weitere Sensoreinrichtung zur Abtastung eines weiteren Emissionssignals des Haushaltsgeräts, wobei die Verarbeitungseinrichtung dazu eingerichtet ist, den Betriebszustand auf der Basis von Messwerten beider Sensoreinrichtungen zu bestimmen. In weiteren Ausführungsformen können auch mehr als zwei unterschiedliche Sensoreinrichtungen vorgesehen sein. Die Sensoreinrichtungen können die gleiche Art von Emissionen, beispielsweise Magnetfelder, auf unterschiedliche Weisen abtasten, etwa an unterschiedlichen Stellen des Haushaltsgeräts, oder unterschiedliche Arten von Emissionen abtasten, beispielsweise akustische, optische, thermische oder kinetische Emissionen. Durch das gleichzeitige Betrachten mehrerer Emissionen kann eine verbesserte Bestimmung der Art des Haushaltsgeräts, oder des Betriebszustands durchgeführt werden. Störsignale aus einem Umfeld des Haushaltsgeräts können verbessert kompensiert oder ausgefiltert werden. Bestimmte charakteristische Vorgänge des Haushaltsgeräts, die auf den Betriebszustand hinweisen, können verbessert erfasst werden. So kann etwa das Öffnen einer Tür des Haushaltsgeräts auf der Basis einer Erschütterung, einer Beschleunigung, eines Geräuschs, einer Veränderung der magnetischen Emission oder einer Kombination dieser Emissionen bestimmt werden.

Die weitere Sensoreinrichtung oder eine von mehreren Sensoreinrichtungen des Kommunikationsmoduls können dazu eingerichtet sein, einen Bereich auf der Außenseite des Gerätegehäuses auf eine messbare Größe abzutasten, die im Zusammenhang mit dem Betriebsprozess des Haushaltsgeräts steht. Dadurch können insbesondere Störungen im Bereich des Haushaltsgeräts verbessert bestimmt werden. Wird etwa im Bodenbereich um eine Geschirrspülmaschine stehendes oder rinnendes Wasser erkannt, so kann dies auf einen Funktionsdefekt des Haushaltsgeräts hinweisen. Werden außergewöhnlich hohe Temperaturen über oder neben einem Herd festgestellt, so können diese auf einen Zimmerbrand hinweisen, der durch die Benutzung des Herds verursacht sein kann. Es kann verbessert bestimmt werden, ob sich im Bereich des Haushaltsgeräts eine Gefahr befindet und eventuell auch, auf welche Weise diese bekämpft werden kann.

Der weitere Sensor kann insbesondere einen VOC-Sensor (VOC: volatile organic compound; flüchtige organische Verbindung) umfassen. Der VOC-Sensor kann eine Reihe von in der Luft gelöste Substanzen bestimmen, die weiteren Aufschluss auf den Betriebszustand des Haushaltsgeräts geben können. So kann mittels dieses Sensors etwa bestimmt werden, ob Kaffee in einer Kaffeemaschine noch frisch ist, feuchte Wäsche in einer Waschmaschine beginnt, Stockflecken anzusetzen, oder ob in einem Kühlschrank verderbende Lebensmittel gelagert sind.

Der Betriebszustand des Haushaltsgeräts kann insbesondere einen Programmfortschritt bezüglich eines voraussichtlichen Programmendes umfassen. Anders ausgedrückt kann die Verarbeitungseinrichtung des Kommunikationsmoduls dazu eingerichtet sein, über die Datenschnittstelle Informationen über eine voraussichtlich verbleibende Betriebsdauer, eine Programmdauer oder eine bereits erfolgte Betriebsdauer innerhalb eines Betriebsprogramms bereitzustellen.

In noch einer weiteren Ausführungsform umfasst der Betriebszustand einen Energieverbrauch des Haushaltsgeräts. So kann ein Benutzer verbessert entscheiden, zu welchem Zeitpunkt er ein anderes, insbesondere energieintensives Haushaltsgerät in Betrieb nimmt. Das parallele Betreiben mehrere Haushaltsgeräte mit großem Energiebedarf kann dadurch vermieden werden. Durch die gleichmäßigere Energieaufnahme des Haushalts können sich Umwelt- oder Kostenvorteile ergeben.

In noch einer weiteren Ausführungsform ist die Verarbeitungseinrichtung dazu eingerichtet, bei Erreichen eines vorbestimmten Betriebszustands des Haushaltsgeräts eine Benachrichtigung zu versenden. Die Benachrichtigung kann beispielsweise das Beenden des Betriebsprogramms oder das Auftreten einer Störung des Haushaltsgeräts betreffen. Die Benachrichtigung kann insbesondere als digitale Nachricht an einen Computer oder ein Smartphone eines Benutzers des Haushaltsgeräts gesendet werden. Es können auch mehrere Nachrichten ausgesandt werden, um wenigstens eine von mehreren Personen zu erreichen, die Einfluss auf das Haushaltsgerät oder den umgebenden Haushalt nehmen kann.

Ein weiterer Aspekt der Erfindung betrifft ein System mit dem oben beschriebenen Kommunikationsmodul und einem mobilen Gerät mit einer drahtlosen Datenschnittstelle zum Empfangen des bestimmten Betriebszustands des Haushaltsgeräts von dem Kommunikationsmodul. Dabei ist das mobile Gerät dazu eingerichtet, eine Warnung auszugeben, wenn es aus einem vorbestimmten Bereich des Haushaltsgeräts entfernt wird, während das Haushaltsgerät in Betrieb ist. Der Bereich kann den Haushalt umfassen und die Position des mobilen Geräts kann mittels einer Positioniereinrichtung des Geräts erfolgen.

So kann ein Benutzer, der mit dem mobilen Gerät den Haushalt verlässt, daran erinnert werden, dass noch ein Haushaltsgerät in Betrieb ist. In einer weiteren Ausführungsform kann die Warnung nur dann ausgegeben werden, wenn der bestimmte Betriebszustand des Haushaltsgeräts auf eine bevorstehende erforderliche oder ratsame Bedienungshandlung eines Benutzers hinweist. Nähert sich beispielsweise eine Waschmaschine dem Ende ihres Betriebsprogramms, so ist es sinnvoll, bis zum Programmende zu warten und dann die nasse Wäsche aus der Waschmaschine zu entfernen und zu trocknen, um Stockflecken an der Wäsche zu vermeiden. Der Benutzer kann aktiv darauf hingewiesen werden, wie lange das Betriebsprogramm voraussichtlich noch dauern wird. Ein gefährlicher Zustand eines unbeaufsichtigt betriebenen Haushaltsgeräts kann auf diese Weise vermieden werden.

Das System kann auch mehrere Kommunikationsmodule umfassen, wobei beim Verlassen des mobilen Geräts aus dem vorbestimmten Bereich die Betriebszustände aller Haushaltsgeräte mittels der Kommunikationsmodule bestimmt werden, um zu bestimmen, ob der Haushalt sicher verlassen werden kann. Der Benutzer kann so beim oder bereits vor dem Verlassen des Haushalts gesammelt feststellen, ob sich alle Haushaltsgeräte in sicheren Zuständen befinden und das Verlassen des Haushalts ungefährlich ist.

Ein Verfahren zum Bestimmen eines Betriebszustands eines Haushaltsgeräts umfasst Schritte des Abtastens eines durch das Gerätegehäuse nach außen dringenden Emissionssignals einer den Betriebsprozess des Haushaltsgeräts durchführenden Komponente des Haushaltsgeräts; des Bestimmens, um welche Art Haushaltsgerät es sich handelt, auf der Basis von Messwerten der Sensoreinrichtung; des Bestimmens des Betriebszustands auf der Basis von Messwerten der Sensoreinrichtung und der bestimmten Art; und des Bereitstellens des bestimmten Betriebszustands.

Es ist bevorzugt, dass die Emissionen mittels einer Verarbeitungseinrichtung des oben beschriebenen Kommunikationsmoduls verarbeitet werden. Eine Verarbeitung kann jedoch auch mittels eines Servers oder einer anderen zentralen Komponente durchgeführt werden, an die die abgetasteten Emissionen übermittelt werden können. Die Verarbeitung der Emissionen kann die Bestimmung des Haushaltsgeräts und/oder die Bestimmung des Betriebszustands umfassen.

Die Erfindung wurde mit Bezug auf ein Kommunikationsmodul, ein System und ein Verfahren beschrieben. Sofern nichts anderes angegeben ist, sind die mit Bezug auf das Kommunikationsmodul erläuterten Merkmale analog auf das System und das Verfahren anwendbar.

Die Erfindung wird nun unter Bezug auf die beiliegenden Figuren genauer beschrieben, in denen:
- Fig. 1: ein System mit mehreren Haushaltsgeräten;
- Fig. 2: ein Kommunikationsmodul zum Einsatz an unterschiedlichen Arten von Haushaltsgeräten; und
- Fig. 3: ein Ablaufdiagramm eines Verfahrens zum Bestimmen eines Betriebszustands eines Haushaltsgeräts
darstellt.

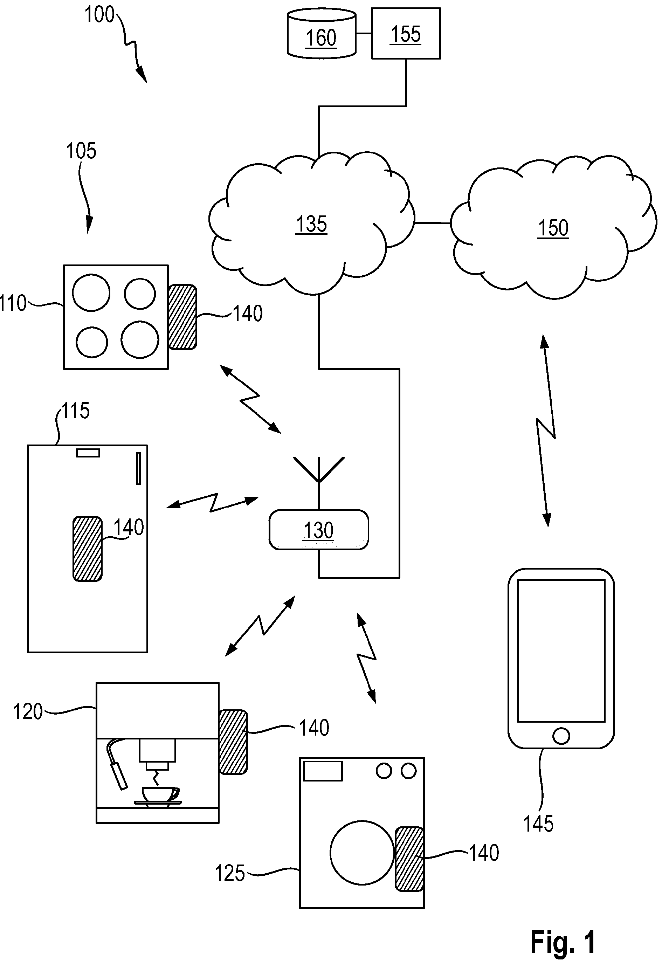

Figur 1 zeigt ein System 100, das wenigstens ein Haushaltsgerät 105 umfasst, wobei die Haushaltsgeräte 105 in einem gemeinsamen Haushalt angeordnet sein können. Dabei können mehrere Arten von Haushaltsgeräten 105 verwendet werden, beispielsweise ein Herd 110, ein Kühlschrank 115, eine Kaffeemaschine 120 oder eine Waschmaschine 125. Bevorzugt ist eine Netzwerkkomponente 130 vorgesehen, die eine Kommunikation mit einem Netzwerk 135, beispielsweise dem Internet, ermöglicht. Die Netzwerkkomponente 130 kann insbesondere zur drahtlosen Kommunikation im Bereich der Haushaltsgeräte 105 eingerichtet sein und in einer Ausführungsform einen WLAN-Router umfassen. An wenigstens einem der Haushaltsgeräte 105 ist ein Kommunikationsmodul 140 angebracht, das dazu eingerichtet ist, einen Betriebszustand des jeweiligen Haushaltsgeräts 105 zu bestimmen und mittels einer drahtlosen Datenschnittstelle bereitzustellen. Der bestimmte Betriebszustand kann insbesondere drahtlos an die Netzwerkkomponente 130 und von dort weiter an eine andere Komponente übermittelt werden. Beispielsweise kann eine Übermittlung an ein mobiles Gerät 145, insbesondere ein Smartphone oder einen Computer, erfolgen. Die Übermittlung kann drahtlos direkt vom Kommunikationsmodul 140, vollständig oder teilweise drahtlos über die Netzwerkkomponente 130, optional über das Netzwerk 135 und weiter optional über ein Mobilfunknetz 150 erfolgen. Dadurch kann das mobile Gerät zur Überwachung der Haushaltsgeräte 105 praktisch überall verwendet werden, eine Anwesenheit im gleichen Haushalt ist nicht erforderlich.

Drahtlose Übermittlungsstrecken können mit beliebigen Datenfunktechniken überwunden werden, beispielsweise WLAN, Bluetooth, Mobildatenfunk oder NFC. Ferner kann eine Übermittlung an eine zentrale Komponente 155 erfolgen, die insbesondere über die Netzwerkkomponente 130 erreichbar ist. Die zentrale Komponente 155 kann als Computerserver ausgebildet sein und einen Datenspeicher 160 zum Abspeichern der übermittelten Nachricht umfassen. Die zentrale Komponente 155 kann auch virtualisiert sein, sodass von einer Cloud, einem Cloud-basierten Dienst oder einem Server in einer Cloud gesprochen werden kann.

Übermittlungen können allgemein vom Kommunikationsmodul 140 ausgehen oder von einer anderen Komponente, insbesondere dem mobilen Gerät 145 oder der zentralen Komponente 155, angefordert werden. In einer Ausführungsform kann das Kommunikationsmodul 140 aktiv eine Benachrichtigung versenden oder bewirken, beispielsweise über die zentrale Komponente 155 an das mobile Gerät 145. Die Benachrichtigung wird üblicherweise versandt, wenn eine vorbestimmte Bedingung eingetreten ist, beispielsweise wenn ein vorbestimmtes Ereignis wie eine Programmunterbrechung eines Haushaltsgeräts 105 bestimmt wurde. Es ist bevorzugt, dass das mobile Gerät 145 dazu eingerichtet ist, die erforderliche Kommunikation abzuwickeln und einem Benutzer eine passende Bedienoberfläche anzubieten. Dazu kann ein Computerprogrammprodukt (auch: Applikation, App) auf dem mobilen Gerät 145 ablaufen. Das Computerprogrammprodukt kann an eine oder mehrere der hier vorgestellten Aufgaben und Funktionalitäten speziell angepasst sein.

Das Kommunikationsmodul 140 ist dazu eingerichtet, an einer Geräteaußenseite eines der Haushaltsgeräte 105 nachgerüstet zu werden und mittels einer Sensoreinrichtung auf der Basis von nach außen dringenden Emissionen einen Betriebszustand des Haushaltsgeräts 105 zu bestimmen. Dabei ist das Kommunikationsmodul 140 dazu eingerichtet, wahlweise an unterschiedlichen Arten von Haushaltsgeräten 105 eingesetzt zu werden. Die Überwachung eines oder mehrerer Haushaltsgeräte 105 oder eines kompletten Haushalts kann dadurch ohne aufwendige und potentiell teure und komplexe Eingriffe an einem der Haushaltsgeräte 105 ermöglicht werden. Die Haushaltsgeräte 105 können flexibel in das System 100 eingebunden werden und die bestimmten Betriebszustände können auf unterschiedliche Weisen ausgewertet werden. In einer Ausführungsform kann eine Überwachung der Haushaltsgeräte 105 erfolgen, in einer weiteren Ausführungsform kann eine Benachrichtigung eines Benutzers über einen bestimmten Betriebszustand oder ein darauf basierendes Ereignis eines Haushaltsgeräts 105 erfolgen und in noch einer weiteren Ausführungsform können bestimmte Betriebszustände eines oder mehrerer Haushaltsgeräte 105 statistisch ausgewertet werden, wobei die Daten miteinander korreliert werden können.

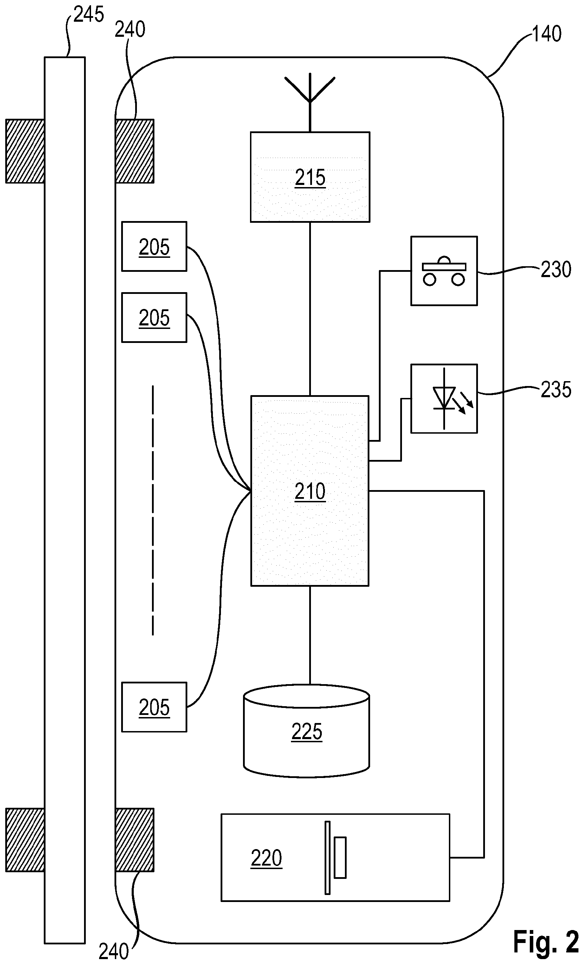

Figur 2 zeigt ein Kommunikationsmodul 140 des Systems 100 von Figur 1 zum Einsatz an unterschiedlichen Arten von Haushaltsgeräten 105. Das Kommunikationsmodul 140 umfasst wenigstens zwei Sensoreinrichtungen 205, eine Verarbeitungseinrichtung 210 und eine drahtlose Datenschnittstelle 215. Ein Energiebedarf des Kommunikationsmoduls 140 wird durch einen Energiespeicher 220 wie z.B. eine Batterie oder einen Akkumulator gedeckt. Optional kann eine Speichereinrichtung 225 vorgesehen sein. Außerdem können in den weiteren Ausführungsformen eine Eingabeeinrichtung 230 und/oder eine Ausgabeeinrichtung 235 vorgesehen sein. Es ist bevorzugt, dass darüber hinaus eine Befestigungsvorrichtung 240 vorgesehen ist, um das Kommunikationsmodul 140 oder wenigstens eine der Sensoreinrichtungen 205 an einer Gehäuseaußenseite eines Haushaltsgeräts 105 anzubringen.

Üblicherweise sind die Sensoreinrichtungen 205 integriert mit dem Kommunikationsmodul 140 ausgeführt. In einigen Ausführungsformen kann jedoch eine Sensoreinrichtung 205 auch in einer vorbestimmten Entfernung des Kommunikationsmoduls 140 verwendet werden, beispielsweise durch ein Kabel verbunden. Am Haushaltsgerät 105 kann dann nur eine Sensoreinrichtung 205 angebracht werden und das restliche Kommunikationsmodul 140 kann in der Nähe gelagert werden, beispielsweise auf oder unter dem Haushaltsgerät 105. Dadurch kann das Kommunikationsmodul verbessert dazu eingerichtet sein, einen Bereich in der Umgebung des Haushaltsgeräts 105 mittels mehrerer Sensoreinrichtungen 205 abzutasten. Beispielsweise können ein Rinnsal oder stehendes Wasser im Bodenbereich des Haushaltsgeräts 105 mittels eines Wassersensors bestimmt werden.

In einer Ausführungsform ist eine der Sensoreinrichtungen 205 dazu eingerichtet, eine Abtastung in einer vorbestimmten Entfernung vom Kommunikationsmodul 140 durchzuführen, beispielsweise wenn die Sensoreinrichtung 205 eine Kamera oder einen Infrarotsensor umfasst. Das Kommunikationsmodul 140 kann dadurch verbessert den Betriebsprozess des Haushaltsgeräts 105 oder eine unmittelbare Auswirkung des Betriebsprozesses auf eine Umgebung abtasten.

Das Haushaltsgerät 105 umfasst bevorzugt ein Gehäuse oder Gerätegehäuse, das im Rahmen einer üblichen Benutzung nicht entfernt wird. Umfasst das Haushaltsgerät 105 eine Tür oder eine andere Öffnung, so kann diese im Rahmen der Benutzung geöffnet oder geschlossen werden. Eine Außenseite des Gehäuses wird Geräteaußenseite genannt. Das Kommunikationsmodul 140 kann an jeder Stelle am Haushaltsgerät 105 angebracht werden, zu der ein Benutzer üblicherweise Zugriff hat, auch beispielsweise auf der Innenseite der Gerätetür. Es ist aber bevorzugt, dass das Kommunikationsmodul 140 an der Gehäuseaußenseite angebracht wird, sodass es einem Betriebsprozess des Haushaltsgeräts 105, insbesondere unter Einwirkung von Wasser oder Wärme, möglichst nicht unmittelbar ausgesetzt ist.

In einer Ausführungsform kann ein Adapter 245 am Haushaltsgerät 105 angebracht werden und das Kommunikationsmodul 140 kann bei Bedarf am Adapter 245 angebracht werden. Der Adapter 245 kann beispielsweise eine Tasche oder eine andere Haltevorrichtung umfassen. Der Adapter 245 kann auf beliebige Weise am Haushaltsgerät 105 gehalten sein, beispielsweise mittels Kleben, eines Klettverschlusses, magnetisch oder mittels einer Schraube. Das Kommunikationsmodul 140 kann bevorzugt leicht am Adapter 245 angebracht oder von ihm entfernt werden.

Wenigstens eine der Sensoreinrichtungen 205 ist dazu eingerichtet, ein Emissionssignal abzutasten, das von einer Komponente des Haushaltsgeräts 105 ausgeht, die einen Betriebsprozess des Haushaltsgeräts 105 durchführt. Eine solche Komponente kann beispielsweise einen Antriebsmotor, eine Heizung, eine Pumpe, ein Ventil oder einen Lüfter umfassen. Bevorzugterweise werden mehrere Emissionssignale des Haushaltsgeräts 105 mittels jeweils zugeordneter Sensoreinrichtungen 205 ausgewertet. Weitere Sensoreinrichtungen 205 können dafür bereitgestellt sein, eine Umgebung oder einen Bereich um das Haushaltsgerät 105 abzutasten. Beispielsweise kann eine Sensoreinrichtung 205 einen Vibrationssensor, einen Beschleunigungssensor, einen Drehratensensor, einen Neigungssensor, einen Magnetfeldsensor, einen Temperatursensor, einen Infrarotsensor, einen VOC-Sensor, einen Luftfeuchtesensor, einen Wassersensor, eine Kamera oder ein Mikrofon umfassen. Die Sensoreinrichtung 205 kann in ihrem Abtastverhalten auch beeinflussbar sein. Beispielsweise kann eine als Kamera ausgebildete Sensoreinrichtung 205 dazu eingerichtet sein, in unterschiedliche Richtungen ausgerichtet zu werden, unterschiedliche Bildwinkel aufzunehmen, auf unterschiedliche Entfernungen scharfzustellen oder sich im Bereich des Haushaltsgeräts 105 zu verschieben.

Die Verarbeitungseinrichtung 210 ist dazu eingerichtet, auf der Basis von Messwerten der wenigstens zwei Sensoreinrichtungen 205 einen Betriebszustand des Haushaltsgeräts 105 zu bestimmen. Dazu können insbesondere Messwerte mehrerer Sensoreinrichtungen 205 miteinander korreliert werden. Den bestimmten Betriebszustand kann die Verarbeitungseinrichtung 210 mittels der drahtlosen Datenschnittstelle 215 nach außen bereitstellen, wie oben mit Bezug auf Figur 1 genauer beschrieben ist. Es können jedoch auch unverarbeitete Messwerte übertragen und auf einer Empfängerseite weiterverarbeitet werden.

Zur Bestimmung des Betriebszustands des Haushaltsgeräts 105 kann es erforderlich sein, zunächst die Art des Haushaltsgeräts 105 zu bestimmen, um Emissionssignale des Haushaltsgeräts 105 sinnvoll interpretieren zu können. Die Art ist üblicherweise durch den Zweck des Haushaltsgeräts 105 vorgegeben. Unterschiedliche Arten von Haushaltsgeräten umfassen etwa eine Waschmaschine 125, eine Geschirrspülmaschine, einen Toaster, eine Kaffeemaschine 120, einen Kühlschrank 115, einen Herd 110 oder einen Staubsauger.

In einer Ausführungsform kann die Art des Haushaltsgeräts 105 mittels der Eingabeeinrichtung 230 manuell eingegeben werden. In einer anderen Ausführungsform kann ein Hinweis auf die Art des Haushaltsgeräts am Adapter 245 oder am Haushaltsgerät 105 angebracht werden, beispielsweise in Form eines optisch abtastbaren Musters, das mittels einer der Sensoreinrichtungen 205 abgetastet werden kann.

In einer weiteren Ausführungsform ist es bevorzugt, dass in der Speichereinrichtung 225 Informationen abgelegt sind, die es erlauben, die Art eines Haushaltsgeräts 105 anhand der mittels der Sensoreinrichtungen 205 abgetasteten Emissionen zu bestimmen. Beispielsweise können unterschiedliche Signaturen für Emissionen der Waschmaschine 125 und der Kaffeemaschine 120 hinterlegt sein. Die Signaturen können eine oder mehrere Emissionen betreffen und deren zeitliche Verläufe zu vorbestimmten Betriebszuständen oder Übergängen zwischen vorbestimmten Betriebszuständen umfassen. Beispielsweise kann die Kaffeemaschine 120 durch ihr Betriebsgeräusch, einen charakteristische Geruch, der durch den VOC-Sensor analysiert werden kann, oder eine mäßige, lokal begrenzte Wärmeabstrahlung beim Zubereiten von Kaffee identifiziert werden. Der Herd 110 kann dadurch bestimmt werden, dass ein Magnetfeld in seinem Bereich im Betrieb auf einen erheblichen Stromverbrauch hinweist oder dass an einer oder mehreren vorbestimmten Kochstellen eine charakteristische Wärmeentwicklung zu beobachten ist. Andere Arten von Haushaltsgeräten 105 können in entsprechender Weise identifiziert werden. Die in der Speichereinrichtung 225 hinterlegten Hinweise oder Signaturen können so gewählt sein, dass sie jeweils für praktisch alle Haushaltsgeräte 105 der gleichen Art stehen. Ferner können Emissionen hinterlegt sein, die es erlauben, die Art des Haushaltsgeräts 105 anhand von Emissionen nur eines Teils ihres Programmablaufs zu bestimmen.

Ein Betriebszustand eines Haushaltsgeräts 105 kann einen bestimmten charakteristischen Programmabschnitt oder ein Ereignis im Rahmen des Betriebsprogramms umfassen. Der Betriebszustand kann insbesondere durch Korrelieren von Messwerten mehrerer Sensoreinrichtungen 205 identifiziert werden. Einige solche Betriebszustände sollen im Folgenden in beispielhafter Weise erläutert werden.

### Geschirrspülmaschine

Mittels des VOC-Sensors kann überprüft werden, ob der Innenraum des Geschirrspülers hygienischen Standards entspricht. Verbleibt schmutziges Geschirr zu lange im Geschirrspüler, so können am Geschirr haftende Speisereste verderben und eine erhöhte Menge VOCs absondern. Überschreitet diese Menge einen vorbestimmten Schwellenwert, so kann ein Betriebszustand bestimmt werden, der auf das Erfordernis eines Reinigungsvorgangs hinweist. Mittels eines kinetischen Sensors (z. B. Vibrationssensor, Neigungssensor, Beschleunigungssensor oder Drehratensensor) kann eine Bewegung der Gerätetür des Geschirrspülers erfasst werden. So kann erfasst werden, wenn die Tür geöffnet oder geschlossen wird und bei Bedarf kann eine entsprechende Nachricht verschickt werden.

Während der Geschirrspüler läuft, kann das Kommunikationsmodul 140 den Betriebszustand auf der Basis von Daten bestimmen, die mittels eines oder mehrerer kinetischer Sensoren abgetastet wurden. Ein Ablauffortschritt des Reinigungsprogramms oder eine voraussichtlich verbleibende Zeit für das Betriebsprogramm können so bestimmt werden. Ein Benutzer kann benachrichtigt werden, wenn der Geschirrspüler an- oder abgestellt wird. Wird beispielsweise nach einer längeren Zeit der Vibrationen über mehrere Minuten eine Vibrationsfreiheit festgestellt, so kann das Ende eines Spülvorgangs bestimmt werden. Wird die Tür des Geräts geöffnet, so kann der Trocknungszustand des Geschirrs mittels des Luftfeuchtigkeits- oder Wassersensors bestimmt werden. Der bestimmte Betriebszustand kann darauf hinweisen, ob das Geschirr noch manuell nachgetrocknet werden muss oder bereit ist, weggeräumt zu werden.

Sollte es während des Programmablaufs Unregelmäßigkeiten geben, so können auch diese durch das Kommunikationsmodul 140 erfasst und ausgewertet werden. Bleiben beispielsweise Vibrationen, die auf einen Betrieb des Geschirrspülers hinweisen, über längere Zeit aus, bevor das erwartete Programmende eingetreten ist, so kann auf eine Fehlfunktion geschlossen werden. Ein Reparaturdienst oder eine Bedienperson können entsprechend benachrichtigt werden.

Anhand von Messwerten eines kinetischen Sensors oder eines Mikrofons kann bestimmt werden, wenn der Geschirrspüler auf ungünstige Weise beladen ist, sodass eine Reinigung erschwert ist. Das Vibrationsprofil des Geschirrspülers kann durch die Beladung verändert sein. Eine Nachricht, die auf die unvorteilhafte Beladung hinweist, kann abgespeichert oder an einen Benutzer bereitgestellt werden.

Weiterhin kann die durch den Geschirrspüler aufgenommene Energie während des Programmablaufs abgetastet und als Zeitverlauf oder als kumulierter Wert bereitgestellt werden. Diese Informationen können beispielsweise graphisch aufbereitet werden, um einem Benutzer, etwa über das mobile Gerät 145, auf möglichst aussagekräftige und verständliche Weise dargeboten zu werden. Insbesondere kann der Energieverbrauch mit den Energieaufnahmen anderer Haushaltsgeräte 105 korreliert werden, sodass rasch und einfach analysiert werden kann, welche Haushaltsgeräte 105 gleichzeitig betrieben werden und wie beispielsweise von tageszeitabhängigen Energiekosten profitiert werden kann.

### Waschmaschine 125 oder Wäschetrockner

Mittels des VOC-Sensors kann das Kommunikationsmodul 140 überprüfen, ob der Innenraum der Waschmaschine 125 hygienischen Anforderungen entspricht. Verbleibt verschmutzte Wäsche zu lang in der Waschmaschine 125, so kann sich ein Geruch einstellen, der mittels des VOC-Sensors analysiert werden kann. Ein Benutzer kann darauf hingewiesen werden, dass ein baldiger Programmstart der Waschmaschine 125 ratsam ist. In entsprechender Weise kann überprüft werden, ob bereits gewaschene, aber noch feuchte Wäsche zu lange in der Waschmaschine 125 verblieben ist, sodass sich Gerüche ergeben, die auf eine Gefahr von Stockflecken hinweisen können. Mittels einer kinetischen Sensoreinrichtung kann eine Bewegung einer Gerätetür überwacht werden. Ein Benutzer kann beispielsweise davon informiert werden, wenn die Gerätetür geöffnet oder geschlossen wird.

Während ein Betriebsprogramm der Waschmaschine 125 abläuft, kann das Kommunikationsmodul 140 den Betriebszustand anhand magnetischer Emissionen verfolgen, die beispielsweise von einem Antriebsmotor der Waschmaschine 125 ausgesandt werden können. Unterschiedliche Abschnitte des Betriebsprogramms, etwa Waschen und Schleudern, können anhand unterschiedlicher spezifischer magnetischer Emissionen unterschieden werden. Eine voraussichtlich verbleibende Betriebsdauer kann daraufhin bestimmt werden.

Die Gerätetür der Waschmaschine 125 kann während des Programmablaufs magnetisch verschlossen sein. Dieses Verschließen kann mittels eines Magnetfeldsensors abgetastet werden. Ein Wasserstand in der Waschmaschine 125 kann durch eine transparente Gerätetür mittels einer Kamera oder eines anderen optischen Sensors des Kommunikationsmoduls 140 überwacht werden. Ein Ende des Programmablaufs kann beispielsweise bestimmt werden, wenn über längere Zeit keine Vibrationen erfolgt sind, kein Wasser in der Gerätetrommel zu erkennen ist und/oder zuvor über eine vorbestimmte Zeit Betriebsemissionen abgetastet wurden. Wird eine Unregelmäßigkeit des Betriebsablaufs festgestellt, so kann auf einen Gerätefehler geschlossen werden. Daraufhin kann eine Servicekraft entsprechend informiert werden. Wie oben beschrieben, kann auch hier eine Energieaufnahme der Waschmaschine 125 verfolgt werden.

### Herd 110 oder Ofen

Ein Betriebszustand des Herds 110 kann anhand von Messwerten eines Temperatursensors oder eines Infrarotsensors erfolgen. Eine Ofentemperatur kann fortlaufend bereitgestellt werden, sodass ein Benutzer diese fortlaufend überwachen kann. Eine Benachrichtigung kann verschickt werden, wenn die Ofentemperatur einen vorbestimmten Wert erreicht hat. Eine weitere Nachricht kann verschickt werden, wenn der Herd 110 länger als eine vorbestimmte Zeit in Betrieb ist. Die Gefahr eines Verkochens oder Verbrennens von Speisen oder eine Feuergefahr können dadurch verringert sein.

Mittels des Temperatursensors oder des Infrarotsensors kann auch ein Feuer im Bereich des Herds 110 abgetastet werden. Das Feuer kann an den erreichten Temperaturen oder anhand der Temperaturentwicklung bestimmt werden. In einer weiteren Ausführungsform kann das Kommunikationsmodul 140 auch das Kochen eines mit Wasser gefüllten Topfs auf dem Herd 110 bestimmen. Wird ein in Etwa gleichmäßiges Ansteigen einer Temperatur oberhalb des Herds 110, gefolgt von einer Phase gleichbleibender Temperatur im Bereich von ca. 100 °C erfasst, so kann das Kochen bestimmt werden. Eine entsprechende Benachrichtigung kann dann verschickt werden. Wird der Herd 110 später ausgeschaltet, so kann das Kommunikationsmodul 140 einen Abkühlvorgang am Herd 110 abtasten.

### Kühlschrank 115 oder Gefriergerät

Auf der Basis von Messwerten des VOC-Sensors kann die Qualität oder Frische eines Nahrungsmittels im Kühlschrank 115 überwacht werden. Übersteigen die Messwerte des VOC-Sensors einen vorbestimmten Schwellenwert, beispielsweise wegen eines alkoholischen Fermentierungsprozesses im Kühlschrank 115, kann eine Nachricht, die auf einen drohenden Verfall von Lebensmitteln im Kühlschrank 115 hinweist, verschickt werden. In einer weiteren Ausführungsform kann das Klima mittels des VOC-Sensors genauer analysiert werden, um herauszufinden, welche Art Lebensmittel sich ihrem Haltbarkeitsende nähert. Einer entsprechenden Benachrichtigung kann beispielsweise ein Rezept beigefügt werden, um das identifizierte Nahrungsmittel zu verkonsumieren.

Der Innenraum des Kühlschranks 115 kann mittels einer Kamera überwacht werden. Dabei kann die Kamera bewegt werden, in unterschiedliche Richtungen geschwenkt werden oder unterschiedliche Blickwinkel einnehmen. Aufnahmen des Innenraums können über eine vorbestimmte Zeit archiviert werden. Bilder können zeit- oder ereignisbasiert aufgenommen und abgespeichert oder übermittelt werden. In einer Ausführungsform kann das Aufnehmen eines Bildes ausgelöst werden, wenn das Kommunikationsmodul 140 eine entsprechende Anforderung über die drahtlose Schnittstelle 215 empfängt. Die Anforderung kann durch einen Benutzer des mobilen Geräts 145 gegeben sein.

Mittels des Temperatur- oder Luftfeuchtigkeitssensors kann ein Zustand der Luft im Kühlschrank 115 überwacht werden. Die bestimmten Daten können allein oder in Kombination mit den Bildern der Kamera übermittelt oder abgespeichert werden. In einer Ausführungsform werden die bestimmten Temperatur- oder Feuchtigkeitswerte auf aufgenommenen Bildern eingeblendet. Ist die Luftqualität schlecht, so kann eine Benachrichtigung des Benutzers erfolgen. Ein Verlauf der bestimmten Luftqualität über eine vorbestimmte Zeit kann bereitgestellt werden.

Außerdem kann überwacht werden, dass eine Temperatur, eine Luftfeuchtigkeit oder ein anderer Wert innerhalb des Kühlschranks 115 einen zugeordneten, vorbestimmten Bereich nicht verlässt. Andernfalls kann eine entsprechende Benachrichtigung versandt werden. Sollte ein Gefrierabteil des Kühlschranks 115 zu warm werden oder zu viel Eis ansetzen, so kann ebenfalls eine entsprechende Nachricht verschickt werden. Ein Öffnen oder Schließen einer Tür des Kühlschranks 115 kann beispielsweise mittels eines kinetischen Sensors erfasst werden. Der Schließzustand der Tür kann fortlaufend bereitgestellt und einem Benutzer angezeigt werden. Bleibt die Tür länger als eine vorbestimmte Zeit geöffnet, so kann eine weitere Benachrichtigung ausgegeben werden.

### Kaffeemaschine 120

An der Kaffeemaschine 120 kann das Kommunikationsmodul 140 beispielsweise dazu eingesetzt werden, mittels des VOC-Sensors die Frische von Kaffeebohnen oder gemahlenem Kaffee in einem Vorratsbehälter der Kaffeemaschine 120 zu überwachen. Hat der Kaffee sein Aroma verloren, so kann eine entsprechende Nachricht ausgegeben werden. Das Aufheizen der Kaffeemaschine 120 kann mittels des Temperatursensors oder des Infrarotsensors überwacht werden. Eine Benachrichtigung des Benutzers kann erfolgen, wenn die Kaffeemaschine 120 ausreichend aufgeheizt ist.

Wird die Kaffeemaschine 120 in Betrieb genommen, so kann dies mittels eines kinetischen Sensors oder des Temperatur- oder Infrarotsensors bestimmt werden. Auf der Basis dieser Informationen kann der Benutzer benachrichtigt werden, wenn der bereitgestellte Kaffee Trinktemperatur erreicht hat.

### Raumüberwachung

Das Kommunikationsmodul 140 kann auch dazu verwendet werden, jeweils einen Bereich um eines der Haushaltsgeräte 105 zu überwachen. Beispielsweise können ein Wäscheraum oder eine Küche überwacht werden. In einem solchen Raum, in dem regelmäßig Wasser verwendet wird, kann nicht nur eine Wasserleckage bestimmt werden, die unter Umständen auf eines der Haushaltsgeräte 105 zurückgeführt werden kann, sondern auch die Gefahr einer Schimmelbildung aufgrund von länger anhaltender erhöhter Luftfeuchtigkeit. Mittels des Luftfeuchtigkeitssensors kann die Luftqualität überwacht werden. Übersteigt die relative Luftfeuchtigkeit einen vorbestimmten Wert für eine vorbestimmte Zeit, so kann eine Benachrichtigung an den Benutzer ausgegeben werden, damit dieser für ein Lüften des Raums sorgt.

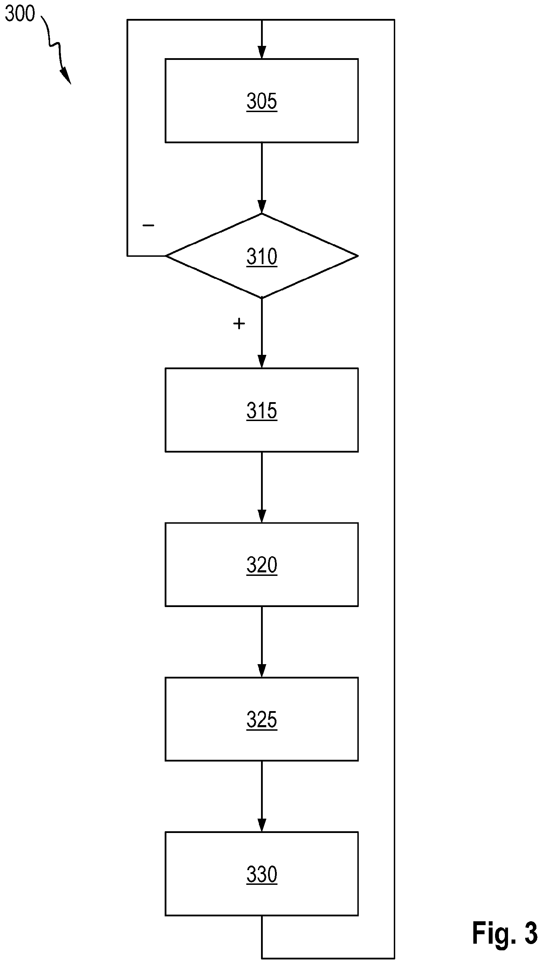

Figur 3 zeigt ein Ablaufdiagramm eines Verfahrens 300 zum Bestimmen eines Betriebszustands eines Haushaltsgeräts 105. Das Verfahren 300 ist insbesondere zum Ablaufen auf dem Kommunikationsmodul 140 eingerichtet. Teile des Verfahrens 300 können mittels der Verarbeitungseinrichtung 210 des Kommunikationsmoduls 140 durchgeführt werden, die bevorzugt als programmierbarer Mikrocomputer oder Mikrocontroller ausgeführt sein kann.

In einer Ausführungsform beginnt das Verfahren 300 mit einem Schritt 305, in dem eine erste Sensoreinrichtung 205 abgetastet wird. Eine andere Sensoreinrichtung 205, die Verarbeitungseinrichtung 210, die Speichereinrichtung 225 oder die drahtlose Datenschnittstelle 215 können dabei noch abgeschaltet oder in einem energiesparenden Modus betrieben werden. Zur Steuerung der Abtastung kann die Verarbeitungseinrichtung 210 zumindest kurzfristig in einen Betriebszustand gebracht werden. Das Abtasten im Schritt 305 erfolgt bevorzugt zeitgesteuert, beispielsweise alle ca. 10 Sekunden oder alle ca. 10 Minuten. Dieses Intervall kann von der zuvor bestimmten Art des Haushaltsgeräts 105 abhängig sein.

In einem Schritt 310 wird dann überprüft, ob der abgetastete Messwert auf eine Emission hinweist, die eine Komponente des Haushaltsgeräts 105 während eines Betriebsprozesses üblicherweise emittiert. Es wird also bestimmt, ob das Haushaltsgerät 105 aktiv ist oder nicht. Ist es inaktiv, so kann das Verfahren 300 zum Schritt 305 zurückkehren und erneut durchlaufen. Andernfalls, wenn eine Aktivität im Schritt 310 bestimmt wurde oder die beschriebene Vorgehensweise zum Stromsparen nicht verfolgt wird, können in einem Schritt 315 die mindestens eine weitere oder mehrere weitere Sensoreinrichtungen 205 abgetastet werden. Welche der Sensoreinrichtungen 205 abgetastet werden, kann sich nach dem zuvor bestimmten Typ des Haushaltsgeräts 105 richten.

Ist der Typ des Haushaltsgeräts 105 noch nicht bekannt, so kann er in einem Schritt 320 auf der Basis der bisherigen Abtastungen bestimmt werden. Dazu können die abgetasteten Messwerte, insbesondere in ihrer Historie über eine vorbestimmte Zeit, mit Informationen verglichen werden, die bekannten Typen von Haushaltsgeräten 105 zugeordnet sind. Diese Informationen können in der Speichereinrichtung 225 des Kommunikationsmoduls 140 abgelegt sein. In einem Schritt 325 wird auf der Basis der abgetasteten Messwerte ein Betriebszustand des Haushaltsgeräts 105 bestimmt. Dabei können bestimmte Verhaltensmuster, Programmabschnitte oder auf eine Störung hinweisende Kombinationen ausgewertet werden. In Abhängigkeit eines Bestimmungsergebnisses kann eine Nachricht an einen Benutzer des Haushaltsgeräts 105 verschickt werden.

Der bestimmte Betriebszustand kann in einem Schritt 330 auch einfach bereitgestellt werden, und zwar entweder zum Abrufen am Kommunikationsmodul 140 selbst oder an einer anderen Einrichtung, insbesondere der zentralen Komponente 155 von Figur 1. Anschließend kann das Verfahren 300 zum Anfang zurückkehren und erneut durchlaufen.

Die mit Bezug auf die Figuren gemachten Erläuterungen sind rein illustrativ und nicht beschränkend zu verstehen. An den beschriebenen Ausführungsformen können viele Änderungen vorgenommen werden, ohne den Schutzbereich der Erfindung zu verlassen, wie er in den beigefügten Patentansprüchen definiert ist.

### Bezugszeichen

- 100: System
- 105: Haushaltsgerät
- 110: Herd
- 115: Kühlschrank
- 120: Kaffeemaschine
- 125: Waschmaschine
- 130: Netzwerkkomponente
- 135: Netzwerk (Internet)

- 140: Kommunikationsmodul
- 145: mobiles Gerät
- 150: Mobilfunknetz
- 155: zentrale Komponente (Server)
- 160: Datenspeicher

- 205: Sensoreinrichtung
- 210: Verarbeitungseinrichtung
- 215: drahtlose Datenschnittstelle
- 220: Energiespeicher
- 225: Speichereinrichtung
- 230: Eingabeeinrichtung
- 235: Ausgabeeinrichtung
- 240: Befestigungsvorrichtung
- 245: Adapter

- 300: Verfahren
- 305: Abtasten erster Sensor
- 310: Haushaltsgerät aktiv?
- 315: Abtasten weitere Sensoren
- 320: Bestimmen Geräteart
- 325: Bestimmen Betriebszustand
- 330: Bereitstellen Betriebszustand

## Patentansprüche

1. Kommunikationsmodul (140) für ein Haushaltsgerät (105), wobei das Kommunikationsmodul (140) folgendes umfasst:
- eine Sensoreinrichtung (205), die zum Anbringen im Bereich eines Gerätegehäuses des Haushaltsgeräts (105) eingerichtet ist;
- eine drahtlose Datenschnittstelle (215);
- wobei die Sensoreinrichtung (205) dazu eingerichtet ist, ein durch das Gerätegehäuse nach außen dringendes Emissionssignal einer den Betriebsprozess des Haushaltsgeräts (105) durchführenden Komponente des Haushaltsgeräts (105) abzutasten;
- eine weitere Sensoreinrichtung (205) zur Abtastung eines weiteren Emissionssignals des Haushaltsgeräts (105);
- eine Verarbeitungseinrichtung (210), die dazu eingerichtet ist, auf der Basis von Messwerten beider Sensoreinrichtungen (205) einen Betriebszustand des Haushaltsgeräts (105) zu bestimmen und mittels der Datenschnittstelle (215) bereitzustellen;
- wobei das Kommunikationsmodul (140) dazu eingerichtet ist, wahlweise an unterschiedlichen Arten von Haushaltsgeräten (105) eingesetzt zu werden;
**dadurch gekennzeichnet, dass**
- das Kommunikationsmodul (140) dazu eingerichtet ist, die weitere Sensoreinrichtung (205) aus einem stromsparenden Modus in einen Betriebsmodus zu versetzen, wenn das mittels der Sensoreinrichtung (205) abgetastete Emissionssignal auf eine Änderung des Betriebszustands des Haushaltsgeräts (105) hinweist.

2. Kommunikationsmodul (140) nach Anspruch 1, wobei die Verarbeitungseinrichtung (210) dazu eingerichtet ist, die Art des Haushaltsgeräts (105) auf der Basis von Messwerten der Sensoreinrichtung (205) zu bestimmen.

3. Kommunikationsmodul (140) nach Anspruch 2, wobei mehreren vorbestimmten Arten von Haushaltsgeräten (105) jeweils vorbestimmte Emissionen zugeordnet sind und die Verarbeitungseinrichtung (210) dazu eingerichtet ist, Messwerte, die mittels der Sensoreinrichtung (205) während des Betriebs des Haushaltsgeräts (105) abgetastet werden, mit vorbestimmten Emissionen zu vergleichen, um zu bestimmen, an welcher Art Haushaltsgerät (105) das Kommunikationsmodul (140) eingesetzt ist.

4. Kommunikationsmodul (140) nach einem der vorangehenden Ansprüche, wobei das Kommunikationsmodul (140) dazu eingerichtet ist, mehr als eine seiner Komponenten (205, 210, 215, 225, 230, 235) aus einem stromsparenden Modus in einen Betriebsmodus zu versetzen, wenn das mittels der Sensoreinrichtung (205) abgetastete Emissionssignal auf eine Änderung des Betriebszustands des Haushaltsgeräts (105) hinweist.

5. Kommunikationsmodul (140) nach einem der vorangehenden Ansprüche, wobei die weitere Sensoreinrichtung (205) dazu eingerichtet ist, einen Bereich auf der Außenseite des Gerätegehäuses auf eine messbare Größe abzutasten, die im Zusammenhang mit dem Betriebsprozess des Haushaltsgeräts (105) steht.

6. Kommunikationsmodul (140) nach einem der vorangehenden Ansprüche, wobei die weitere Sensoreinrichtung (205) einen VOC-Sensor umfasst.

7. Kommunikationsmodul (140) nach einem der vorangehenden Ansprüche, wobei die Verarbeitungseinrichtung (210) dazu eingerichtet ist, einen Programmfortschritt des Haushaltsgeräts (105) bezüglich eines voraussichtlichen Programmendes bereitzustellen.

8. Kommunikationsmodul (140) nach einem der vorangehenden Ansprüche, wobei der Betriebszustand einen Energieverbrauch des Haushaltsgeräts (105) umfasst.

9. Kommunikationsmodul (140) nach einem der vorangehenden Ansprüche, wobei die Verarbeitungseinrichtung (210) dazu eingerichtet ist, bei Erreichen eines vorbestimmten Betriebszustands des Haushaltsgeräts (105) eine Benachrichtigung zu versenden.

10. System (100), umfassend ein Kommunikationsmodul (140) nach einem der vorangehenden Ansprüche und ein mobiles Gerät (145) mit einer drahtlosen Datenschnittstelle (215) zum Empfangen des bestimmten Betriebszustands des Haushaltsgeräts (105) von dem Kommunikationsmodul (140), wobei das mobile Gerät (145) dazu eingerichtet ist, eine Warnung auszugeben, wenn es aus einem vorbestimmten Bereich des Haushaltsgeräts (105) entfernt wird, während das Haushaltsgerät (105) in Betrieb ist.

11. Verfahren (300) zum Bestimmen eines Betriebszustands eines Haushaltsgeräts (105), wobei das Verfahren (300) folgende Schritte umfasst:
- Abtasten (305, 315) eines durch das Gerätegehäuse nach außen dringenden Emissionssignals einer den Betriebsprozess des Haushaltsgeräts (105) durchführenden Komponente des Haushaltsgeräts (105) mittels einer Sensoreinrichtung;
- Bestimmen (320), um welche Art Haushaltsgerät (105) es sich handelt, auf der Basis von Messwerten der Sensoreinrichtung (205);
- Versetzen einer weiteren Sensoreinrichtung (205) aus einem stromsparenden Modus in einen Betriebsmodus, wenn das mittels der Sensoreinrichtung (205) abgetastete Emissionssignal auf eine Änderung des Betriebszustands des Haushaltsgeräts (105) hinweist;
- Bestimmen (325) des Betriebszustands auf der Basis von Messwerten beider Sensoreinrichtungen (205) und der bestimmten Art; und
- Bereitstellen (330) des bestimmten Betriebszustands.

## Claims

1. Communication module (140) for a household appliance (105), wherein the communication module (140) comprises the following:
- a sensor device (205) which is designed to be attached in the region of an appliance housing of the household appliance (105);
- a wireless data interface (215);
- wherein the sensor device (205) is designed to scan an emission signal, which passes through the appliance housing to the outside, of a component of the household appliance (105) carrying out the operating process of the household appliance (105);
- a further sensor device (205) for scanning a further emission signal of the household appliance (105);
- a processing device (210) which is designed to determine an operating state of the household appliance (105) on the basis of measured values of the two sensor devices (205), and to provide it by means of the data interface (215);
- wherein the communication module (140) is designed to be selectively used on different types of household appliance (105),
**characterised in that**
- the communication module (140) is designed to shift the further sensor device (205) from a power-saving mode into an operating mode if the emission signal scanned by means of the sensor device (205) indicates a change in the operating state of the household appliance (105).

2. Communication module (140) according to claim 1, wherein the processing device (210) is designed to determine the type of household appliance (105) on the basis of measured values of the sensor device (205).

3. Communication module (140) according to claim 2, wherein predetermined emissions respectively are associated with a plurality of predetermined types of household appliance (105), and the processing device (210) is designed to compare measured values, which are scanned by means of the sensor device (205) during operation of the household appliance (105), with predetermined emissions in order to determine on which type of household appliance (105) the communication module (140) is used.

4. Communication module (140) according to one of the preceding claims, wherein the communication module (140) is designed to shift at least one of its components (205, 210, 215, 225, 230, 235) from a power-saving mode to an operating mode if the emission signal scanned by means of the sensor device (205) indicates a change in the operating state of the household appliance (105).

5. Communication module (140) according to one of the preceding claims, wherein the further sensor device (205) is designed to scan a region on the outer side of the appliance housing for a measurable variable which is connected to the operating process of the household appliance (105).

6. Communication module (140) according to one of the preceding claims, wherein the further sensor device (205) comprises a VOC sensor.

7. Communication module (140) according to one of the preceding claims, wherein the processing device (210) is designed to provide the progress of the program of the household appliance (105) with respect to an expected program end.

8. Communication module (140) according to one of the preceding claims, wherein the operating state comprises an energy consumption of the household appliance (105).

9. Communication module (140) according to one of the preceding claims, wherein the processing device (210) is designed to send a notification when a predetermined operating state of the household appliance (105) is reached.

10. System (100) comprising a communication module (140) according to one of the preceding claims and a mobile device (145) having a wireless data interface (215) for receiving the determined operating state of the household appliance (105) from the communication module (140), wherein the mobile device (145) is designed to output a warning if it is removed from a predetermined region of the household appliance (105) while the household appliance (105) is in operation.

11. Method (300) for determining an operating state of a household appliance (105), wherein the method (300) comprises the following steps:
- scanning (305, 315) an emission signal, which passes through the appliance housing to the outside of a component of the household appliance (105) carrying out the operating process of the household appliance (105);
- determining (320) the type of household appliance (105) on the basis of measured values of the sensor device (205);
- shifting a further sensor device (205) from a power-saving mode into an operating mode if the emission signal scanned by means of the sensor device (205) indicates a change in the operating state of the household appliance (105);
- determining (325) the operating state on the basis of measured values of the sensor device (205) and the determined type; and
- providing (330) the determined operating state.

## Revendications

1. Module de communication (140) pour un appareil ménager (105), dans lequel le module de communication (140) comprend les éléments suivants :
- un dispositif de capteur (205) aménagé afin d'être placé dans la zone d'une carcasse d'appareil de l'appareil ménager (105) ;
- une interface de données sans fil (215) ;
- dans lequel le dispositif de capteur (205) est aménagé afin de balayer un signal d'émission pénétrant vers l'extérieur à travers la carcasse d'appareil, d'un composant de l'appareil ménager (105) exécutant le processus d'exploitation de l'appareil ménager (105) ;
- un dispositif de capteur supplémentaire (205) pour le balayage d'un signal d'émission supplémentaire de l'appareil ménager (105) ;
- un dispositif de traitement (210), aménagé afin de déterminer, sur la base de valeurs de mesure des deux dispositifs de capteur (205), un état de fonctionnement de l'appareil ménager (105) et de le mettre à disposition au moyen de l'interface de données (215) ;
- dans lequel le module de communication (140) est aménagé afin d'être utilisé au choix sur différents types d'appareils ménagers (105) ; **caractérisé en ce que**
- le module de communication (140) est aménagé afin de faire passer le dispositif de capteur supplémentaire (205) d'un mode d'économie d'énergie vers un mode de fonctionnement lorsque le signal d'émission balayé au moyen du dispositif de capteur (205) indique une modification de l'état de fonctionnement de l'appareil ménager (105).

2. Module de communication (140) selon la revendication 1, dans lequel le dispositif de traitement (210) est aménagé afin de déterminer le type de l'appareil ménager (105) sur la base de valeurs de mesure du dispositif de capteur (205).

3. Module de communication (140) selon la revendication 2, dans lequel des émissions prédéterminées sont respectivement affectées à plusieurs types d'appareils ménagers (105) prédéterminés et le dispositif de traitement (210) est aménagé afin de comparer les valeurs de mesure, balayées au moyen du dispositif de capteur (205) durant le fonctionnement de l'appareil ménager (105), à des émissions prédéterminées, afin de déterminer sur quel type d'appareil ménager (105) le module de communication (140) est utilisé.

4. Module de communication (140) selon l'une des revendications précédentes, dans lequel le module de communication (140) est aménagé afin de faire passer plus d'un de ses composants (205, 210, 215, 225, 230, 235) d'un mode d'économie d'énergie vers un mode de fonctionnement lorsque le signal d'émission balayé au moyen du dispositif de capteur (205) indique une modification de l'état de fonctionnement de l'appareil ménager (105).

5. Module de communication (140) selon l'une des revendications précédentes, dans lequel le dispositif de capteur supplémentaire (205) est aménagé afin de balayer une zone sur le côté extérieur de la carcasse d'appareil quant à une grandeur mesurable liée au processus d'exploitation de l'appareil ménager (105).

6. Module de communication (140) selon l'une des revendications précédentes, dans lequel le dispositif de capteur supplémentaire (205) comprend un capteur VOC.

7. Module de communication (140) selon l'une des revendications précédentes, dans lequel le dispositif de traitement (210) est aménagé afin de mettre à disposition un avancement de programme de l'appareil ménager (105) concernant une fin de programme probable.

8. Module de communication (140) selon l'une des revendications précédentes, dans lequel l'état de fonctionnement comprend une consommation énergétique de l'appareil ménager (105).

9. Module de communication (140) selon l'une des revendications précédentes, dans lequel le dispositif de traitement (210) est aménagé afin d'envoyer une notification suite à l'atteinte d'un état de fonctionnement de l'appareil ménager (105) prédéterminé.

10. Système (100), comprenant un module de communication (140) selon l'une des revendications précédentes et un appareil mobile (145) avec une interface de données sans fil (215) pour la réception de l'état de fonctionnement déterminé de l'appareil ménager (105) par le module de communication (140), dans lequel l'appareil mobile (145) est aménagé afin d'émettre un avertissement lorsqu'il est éloigné d'une zone de l'appareil ménager (105) prédéterminée, durant le fonctionnement de l'appareil ménager (105).

11. Procédé (300) pour la détermination d'un état de fonctionnement d'un appareil ménager (105), dans lequel le procédé (300) comprend les étapes suivantes :
- balayage (305, 315) d'un signal d'émission pénétrant vers l'extérieur à travers la carcasse d'appareil, d'un composant de l'appareil ménager (105) exécutant le processus d'exploitation de l'appareil ménager (105) au moyen d'un dispositif de capteur ;
- détermination (320) du type d'appareil ménager (105) dont il s'agit, sur la base de valeurs de mesure du dispositif de capteur (205) ;
- passage d'un dispositif de capteur supplémentaire (205) d'un mode d'économie d'énergie vers un mode de fonctionnement lorsque le signal d'émission balayé au moyen du dispositif de capteur (205) indique une modification de l'état de fonctionnement de l'appareil ménager (105) ;
- détermination (325) de l'état de fonctionnement sur la base de valeurs de mesure des deux dispositifs de capteur (205) et du type déterminé ; et
- mise à disposition (330) de l'état de fonctionnement déterminé.
